(19) Europäisches Patentamt
European Patent Office
Office européen des brevets

(11) Numéro de publication : **0 188 486**
**B1**

(12) **FASCICULE DE BREVET EUROPÉEN**

(45) Date de publication du fascicule du brevet : **01.02.89**

(51) Int. Cl.$^4$ : **C 08 F 8/00**

(21) Numéro de dépôt : **85903302.9**

(22) Date de dépôt : **03.07.85**

(86) Numéro de dépôt international : **PCT/FR 85/00185**

(87) Numéro de publication internationale : **WO/86006 (30.01.86 Gazettee 86/03)**

(54) **NOUVEAU POLYMERE FLUORE IONIQUE, SON PROCEDE DE PREPARATION ET LES MEMBRANES D'ELECTROLYSE FORMEES A PARTIR DE CE POLYMERE.**

(30) Priorité : **13.07.84 FR 8411145**
**20.06.85 FR 8509396**

(43) Date de publication de la demande : **30.07.86 Bulletin 86/31**

(45) Mention de la délivrance du brevet : **01.02.89 Bulletin 89/05**

(84) Etats contractants désignés : **AT BE CH DE FR GB IT LI LU NL SE**

(56) Documents cités :
**FR–A– 1 590 264**
**FR–A– 2 276 087**

(73) Titulaire : **ATOCHEM**
**4 & 8, Cours Michelet La Défense 10**
**F-92800 Puteaux (FR)**

(72) Inventeur : **BLAISE, Jean**
**23, quai Perrache**
**F-69002 Lyon (FR)**
Inventeur : **JACCAUD, Michel**
**38bis, rue des Granges**
**F-69005 Lyon (FR)**
Inventeur : **LAVIRON, Charles**
**27 A, rue Soeur Bouvier**
**F-69005 Lyon (FR)**
Inventeur : **MATHAIS, Henri Hameau de Saint-Didier**
**Chemin de l'Indiennerie**
**F-69370 Saint-Didier Mont d'Or (FR)**
Inventeur : **RAVIER, Dominique**
**14, rue des Tourelles**
**F-69005 Lyon (FR)**
Inventeur : **LEROUX, Francis Les Hauts de Collonges**
**Chemin de la Chêneraie**
**F-69530 Brignais (FR)**

(74) Mandataire : **Rochet, Michel et al**
**ATOCHEM Département Propriété Industrielle**
**F-92091 Paris la Défense Cédex 42 (FR)**

**EP 0 188 486 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet de nouveaux polymères fluorés ioniques. Elle concerne également leur procédé de préparation et leurs applications, notamment pour la réalisation de membranes utilisables dans les cellules d'électrolyse d'halogénures alcalins. Le brevet FR 2.276.087 décrit des étoffes échangeuses d'ions tricotées et tissées formées à partir de filaments d'un polymère fluoré contenant des groupes ioniques. On a maintenant trouvé des polymères dont la mise en œuvre est plus simple.

Ces polymères $P_1$ sont caractérisés en ce que l'enchaînement macromoléculaire comprend au moins un motif de formule :

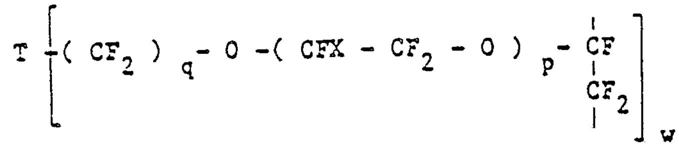

(I)

et des motifs de formule II et/ou des motifs de formule III

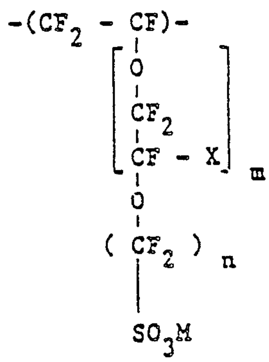

(II)

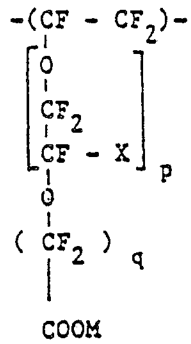

(III)

dans lesquelles :

— w est au moins égal à 2 et inférieur à 10

— m et p, qui peuvent être différents d'un motif à l'autre peuvent avoir les valeurs de 0 à 3 inclus

— n et q, qui peuvent être différents d'un motif à l'autre peuvent avoir les valeurs de 1 à 6 inclus

— M représente un atome d'hydrogène ou un cation monovalent

— X représente un atome de fluor ou un groupement alkyle perfluoré renfermant jusqu'à 10 atomes de carbone

— T représente le lien valentiel ou une chaîne perfluorée de formule

$$-(CFX_1O)_{r3}-(CF_2CFX_1O)_{r1}-W-(OCFX_1CF_2)_{r2}-(OCFX_1)_{r4}-$$

dans laquelle

— $X_1$ représente X ou un groupement alkyle perfluoré ayant jusqu'à 10 atomes de carbone et portant une ou des fonctions sulfoniques et/ou carboxyliques

— W représente un radical perfluoré, linéaire ou cyclique renfermant jusqu'à 12 atomes de carbone

— r1 et r2 peuvent prendre séparément une valeur de 0 à 3 inclus

— r3 et r4 peuvent prendre séparément les valeurs de 0 ou 1.

L'invention concerne plus particulièrement des polymères fluorés ioniques comprenant, outre les motifs de formule I et les motifs de formule II et/ou III, des motifs de formule

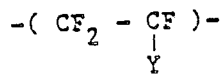

(IV)

dans laquelle le symbole Y représente un atome d'hydrogène, un atome de chlore, un atome de fluor, un radical alkyle perfluoré ou alkoxy perfluoré renfermant jusqu'à 10 atomes de carbone.

L'invention concerne, à titre préférentiel, les polymères comportant des motifs de formule I, II et/ou III et éventuellement IV, en quantités telles que le poids équivalent — P.E. — (masse en gramme de polymère contenant une mole de groupe échangeur) desdits polymères soit compris entre 400 et 10.000. De préférence ce poids équivalent est compris entre 200 et 2000 et plus particulièrement entre 600 et 1300. On ne sortirait pas du cadre de l'invention en préparant des polymères de poids équivalent supérieur à 10.000 et pouvant atteindre 50.000 voire davantage.

Dans les formules I, II, III et IV, et à titre préférentiel, le symbole X représente un atome de fluor ou un groupement $CF_3$, le symbole Y représente un atome de fluor, les symboles m et p représentent 0 ou 1 ; le symbole n représente 2, 3, 4 ou 5, et le symbole q représente 2, 3, 4 ou 5.

L'invention concerne tout particulièrement les polymères comportant des motifs de formule :

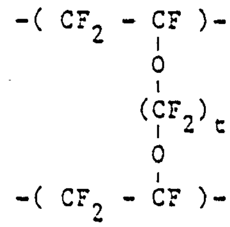

(Ia)

dans laquelle t représente un nombre compris entre 2 et 15 inclus, associés à des motifs de formule :

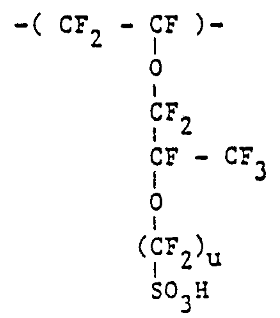

(IIa)

et/ou des motifs de formule

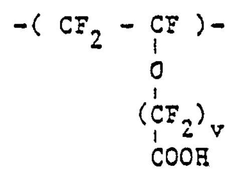

(IIIa)

où u et v représentent séparément 2, 3 ou 4.

Selon l'invention, et plus particulièrement pour une masse de polymère $P_1$ contenant un équivalent, il est clair que la quantité de motifs IV ne peut être supérieure à PE/100, de même que la quantité de motif I ne peut être supérieure à PE/294 et que la somme des quantités de motifs II et III est égale à 1, ces quantités étant exprimées en moles.

Pour un poids équivalent de 1000 la quantité de chacun des motifs I à IV sera avantageusement prise dans les domaines suivants (en moles) :

— I supérieur à 0 et inférieur ou égal à 2,75
— II supérieur ou égal à 0 et inférieur ou égal à 1
— III supérieur ou égal à 0 et inférieur ou égal à 1
— IV supérieur ou égal à 0 et inférieur ou égal à 8,08,

la somme II + III n'étant pas nulle.

L'invention concerne également un procédé de préparation des polymères comprenant les motifs de formule I. Ce procédé consiste à former un polymère $P_2$ comportant au moins l'une des entités de formules Va — associés éventuellement à des motifs de formule Vb — à Vd et à soumettre ledit polymère à un traitement permettant l'élimination des groupements de formules VIa à VId et l'obtention de liaisons $CF_2$—$CF_2$ à l'intérieur du même motif (Va, $Va_1$) ou entre deux motifs (Vb à Vd), les formules précitées ayant les significations suivantes :

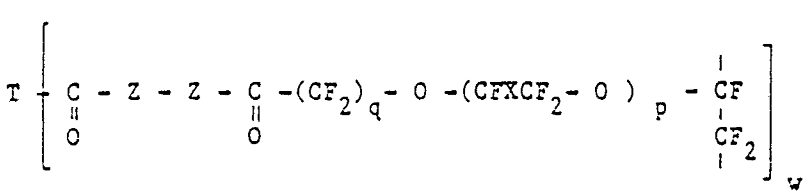

(Va)

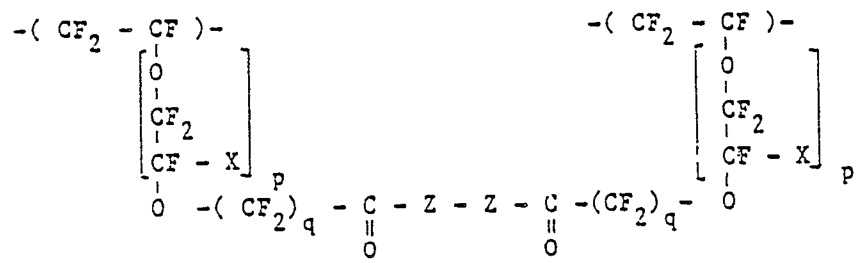

Va1

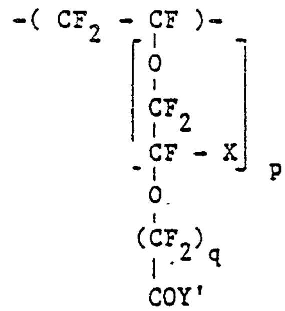

(Vb)

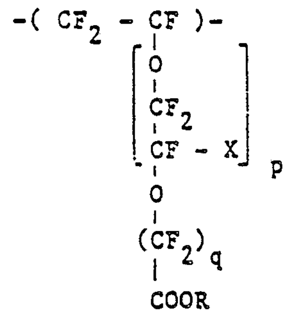

(Vc)

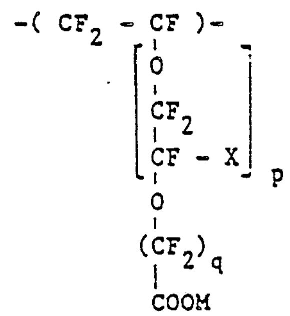

(Vd)

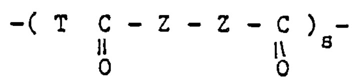

(Ve)

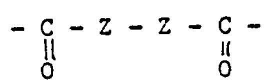

(VIa)

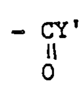

(VIb)

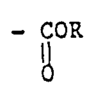

(VIc)

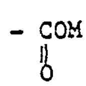

(VId)

où p, q, M possèdent les significations données précédemment, Z représente O, NH ou —Z—Z— représentent ensemble —O— ou —N = N—, Y' représente F, Cl ou Br et R représente un radical alkyle ayant de 1 à 5 atomes de carbone, s est au moins égal à 1 et, de préférence n'excède pas 10.

L'élimination des motifs VIa à VId peut être réalisée de différentes méthodes : on peut notamment utiliser un traitement thermique qui, selon la nature desdits groupements peut aller jusqu'à 100 °C dans le cas des groupements VIa ou jusqu'à 200-220 °C dans le cas de groupements VIc. Dans le cas particulier des polymères comprenant des entités de formules Va ou $Va_1$ dans lesquelles le symbole Z représente —O—, on peut avantageusement conduire la réaction d'élimination des groupements VIa, qui génère des radicaux $CF_2$ en présence d'un composé fluoré insaturé télomérisable ou d'une oléfine halogénofluorée.

Parmi les autres méthodes, on mentionnera notamment l'irradiation, par exemple par rayons U.V., X, gamma, par bombardement électronique ou neutronique, l'irradiation pouvant être utilisée seule ou associée à d'autres traitements tels que le traitement thermique sus-mentionné. On peut aussi éliminer les motifs VIa à VId au moyen d'agents oxydants puissants tels que le tétracétate de plomb ou encore par réaction électrochimique telle que la réaction de Kolbe.

Pour des raisons évidentes, on ne sortirait pas davantage du cadre de ladite invention en préparant des polymères comportant outre les motifs I, II et/ou III et éventuellement IV mentionnés précédemment, des motifs Va, $Va_1$, Vb, Vc, Vd et/ou Ve résultant d'une élimination incomplète des groupements VIa, VIb, VIc et/ou VId et/ou des produits secondaires de l'élimination desdits motifs.

Les polymères $P_2$ possédant les entités de formules Va à Ve peuvent eux-mêmes être obtenus par modifications de polymères $P_3$ comportant des motifs de formule III, éventuellement associés à d'autres motifs tels que les motifs de formule II et/ou les motifs de formule IV, dans le but d'obtenir l'une ou l'autre des entités Va à Ve. Diverses techniques sont utilisables à cette fin. On peut notamment former les polymères ayant des entités Va par action de peroxyde d'hydrogène ou d'un peroxyde métallique ou encore par action d'hydrazine (selon la signification de Z). On peut également utiliser $Cl_2$, $PCl_5$, $PCl_3$, $POCl_3$, $PBr_3$, $PBr_5$, $SOCl_2$, éventuellement suivi d'un traitement au moyen d'un fluorure alcalin pour former des entités à groupement fluorure d'acyle Vb.

Dans le cas particulier de l'obtention de polymères $P_2$ ayant des motifs de formule Va (associés éventuellement aux motifs Ve) dans laquelle —Z— représente —O—, il convient, préalablement à l'action des agents précités, de mettre en contact le polymère $P_3$ avec un composé de formule

$$T\left(\underset{\underset{O}{\|}}{C}\;G\right)_{w'} \qquad \text{(VII)}$$

dans laquelle

— T possède la signification donnée précédemment

— G représente OH, F, Cl, Br, I ou OR, le symbole R représentant un radical alkyle ayant de 1 à 5 atomes de carbone

— w' représente un nombre compris entre 2 et 4 inclus ou avec l'anhydride de l'acide répondant à la formule VII.

Les motifs de la formule Ve peuvent résulter de l'autocondensation du composé de formule VII précitée.

Il ressort de la formule VII que le composé perfluoré peut notamment être un diacide mais l'invention s'applique aussi aux tri- et tétracides et à tous mélanges contenant des di, tri et/ou tétracides, que la totalité des fonctions acide (ou halogénure d'acyle, ou ester) aient réagi pour donner les motifs représentés dans la formule I ou qu'une partie seulement de ces fonctions aient conduit auxdits motifs I, l'enchaînement représenté par le symbole T pouvant alors porter des fonctions libres, en particulier carboxyliques, ainsi qu'il est précisé dans la définition de T.

On utilisera avantageusement un acide perfluoro alkane dioïque, pouvant comporter des ponts éther, et notamment l'un des diacides suivants :

— l'acide perfluoropropane dioïque

— l'acide perfluorobutane dioïque

— le trifluorométhyl-2 oxa-3 perfluorooctane dioïque-1,8

— le bis(trifluorométhyl)-2,7 dioxa-3,6 perfluorooctane dioïque-1,8

— le bis(trifluorométhyl)-2,8 dioxa-3,7 perfluorononane dioïque-1,9

— le bis(trifluorométhyl)-2,9 dioxa-3,8 perfluorodécane dioïque-1,10

La mise en contact du composé de formule VII ou de l'anhydride correspondant avec le polymère $P_3$ peut s'effectuer à une température pouvant être comprise entre 20 et 120 °C. Le temps de contact peut selon la température, aller de 1 à 24 heures. L'opération peut être effectuée à partir du composé VII ou d'une solution dudit composé.

Les polymères $P_3$ peuvent être préparés selon les techniques connues de polymérisation de monomères fluorés insaturés. On peut en particulier polymériser des éthers vinyliques correspondant aux motifs de formule III ; on peut également polymériser des éthers vinyliques correspondant aux motifs de formule II et, selon le cas, transformer tout ou partie des groupements $—SO_3M$ en groupements —COOM. On peut également former des polymères ayant des groupements $—SO_3M$ et —COOM en copolymérisant

les éthers vinyliques fluorés correspondants. Naturellement on peut, dans toutes les hypothèses polymériser les monomères précités avec l'oléfine fluorée conduisant aux motifs de formule IV. On peut effectuer ces réactions de polymérisation en suivant les techniques maintenant connues, et en particulier en opérant au sein d'un chlorofluoroalcane comme milieu solvant en présence d'un initiateur peroxydique. Une technique de ce type est décrite par exemple dans le brevet français 1.590.264.

L'invention a également pour objet les membranes préparées totalement ou partiellement à partir des polymères $P_1$ et/ou présentant sur tout ou partie de leur surface ou de leur épaisseur lesdits polymères $P_1$. Autrement dit pour la préparation de ces membranes on peut soit partir du polymère $P_1$ soit du polymère $P_2$ ou $P_3$ et, sur la membrane conformée, transformer les polymères $P_2$ ou $P_3$ en polymère $P_1$. On peut également former la membrane par colaminage de deux films, l'une au moins renfermant, au moins au stade final de fabrication, le polymère $P_1$. A titre d'illustration des structures de membranes conformes à l'invention, on mentionnera notamment :

— les membranes monocouches mais asymétriques constituées de polymères $P_3$ transformés sur une face en polymères $P_1$, lesdits polymères $P_3$ et $P_1$ pouvant renfermer des motifs de formule II, notamment sur la face opposée à la face $P_1$ précitée, et des motifs de formule IV ;

— les membranes obtenues par colaminage de deux polymères $P_3$, l'un de ceux-ci étant transformé en polymère $P_1$, l'un et/ou l'autre des polymères pouvant renfermer des motifs de formule II et/ou des motifs de formule IV.

Les techniques de fabrication de membranes, par extrusion d'un film et éventuellement colaminage sont en elles-mêmes connues et ne constituent pas un objet de l'invention. D'une manière générale les membranes conformes à l'invention présentent une épaisseur comprise entre 20 et 300 µm, l'épaisseur pouvant aller de 10 µm à 1 mm, l'épaisseur de la couche constituée par le polymère $P_1$ pouvant aller de 5 à 50 µm. Les membranes peuvent si nécessaire être renforcées par incorporation d'un matériau tissé ou non tissé pouvant notamment être constitué de fibres de polymère fluoré, de fibres d'amiante ou de fibres de carbone.

Les membranes conformes à l'invention peuvent être utilisées dans les cellules d'électrolyse de substances diverses et tout particulièrement de solutions aqueuses d'halogénures alcalins. De telles membranes présentent des propriétés mécaniques améliorées et conservent leur haut niveau de performances sous forte densité de courant et ceci pendant une longue durée de fonctionnement.

Les exemples suivants illustrent l'invention.

## Exemple 1

a) On terpolymérise dans les conditions prévues dans le brevet français 1.590.264 au sein du trifluoro-1,1,2 trichloro-1,2,2 éthane et en présence de peroxyde de bis (perfluoropropionyle) :

— 9,5 moles de tétrafluoroéthylène

— 0,2 mole de fluorure de perfluoro dioxa-3,6 méthyl-4 octène-7 sulfonyle ($CF_2 = CFOCF_2CF(CF_3)OCF_2CF_2SO_2F$)

— 0,8 mole de perfluoro oxa-6 octèn-7 oate de méthyle ($CF_2 = CFOCF_2CF_2CF_2CF_2COOCH_3$).

Le polymère obtenu est transformé en film de 250 µm d'épaisseur. On mesure par méthode ATR (Attenuated Total Reflection) les hauteurs des pics $—SO_2F$ (1460 $cm^{-1}$) et $—COOCH_3$ (1780 $cm^{-1}$).

b) On hydrolyse le film dans NaOH 120 g/l/$CH_3OH$ 40 % à 90 °C pendant 16 heures. On lave la membrane à l'eau et la sèche sous vide à 50 °C pendant 16 heures. La membrane est immergée dans $SOCl_2$ à 80 °C pendant 10 heures (conversion des groupements —COONa en groupements —COCl, vérifiée par la méthode ATR — pic caractéristique à 1810 $cm^{-1}$).

c) La membrane est placée dans un réacteur en polytétrafluoroéthylène, une surface de la membrane étant mise en contact avec une solution dans le méthanol de 0,42 g de peroxyde de sodium et 20 g d'eau à — 15 °C pendant 1 heure. On lave la membrane avec de l'eau froide après l'avoir sortie du réacteur, on élève progressivement la température à 40 °C et conserve la membrane à 40 °C pendant 2 heures sous atmosphère d'azote. On immerge la membrane dans du méthanol contenant HCl pour convertir les groupements COCl et COOH résiduels en $COOCH_3$. L'analyse ATR montre une diminution sensible du pic du groupe $COOCH_3$.

d) La membrane est hydrolysée dans NaOH 120 g/l — $CH_3OH$ 40 % à 90 °C pendant 8 heures. L'observation au microscope de la section de la membrane montre que la couche renfermant le polymère $P_1$ est d'environ 25 µm.

e) Le polymère constituant la susdite couche de 25 µm présente un poids équivalent de 1100 et la répartition suivante des motifs (en moles) :

— 0,04 mole de motifs I où T représente le lien valentiel, w = 2, q = 4 et p = 0

— 0,2 mole de motifs II

— 0,72 mole de motifs III

— 7,41 moles de motifs IV

f) La membrane est installée dans une cellule d'électrolyse, la surface traitée faisant face à la cathode et on effectue l'électrolyse du chlorure de sodium dans les conditions suivantes :

— Section de passage du courant dans la membrane : 0,5 $dm^2$

— Anode constituée d'un substrat en titane et comportant un revêtement à base de métaux précieux

— Cathode : plaque perforée de nickel

— Distance interpolaire : 3 mm

— Anolyte : alimentation par une solution aqueuse saturée de chlorure de sodium, la concentration dans l'anolyte étant maintenue à 200 g/l

— Catholyte : solution aqueuse de soude dont la concentration est maintenue à 450 g/l par adjonction d'eau

— Densité de courant : 30 A/$dm^2$

— Température dans les compartiments anodique et cathodique : 85 °C

Résultats :

| | | | | | |
|---|---|---|---|---|---|
| - Durée de passage du courant | : | 24 | h | 720 | h |
| - Rendement en courant | : | 96 | % | 96 | % |
| - Tension | : | 3,5 | V | 3,5 | V |

Après immersion de la membrane dans une solution de soude à 45 % en poids à 90 °C pendant 8 heures on n'observe aucune dégradation de la membrane ni aucune diminution des performances durant de nouveaux essais en électrolyse dans les conditions sus-mentionnées.

Exemple 2

a) On terpolymérise dans les conditons prévues dans le brevet français 1 590 264 au sein du trifluoro-1,1,2 trichloro-1,2,2 éthane et en présence de peroxyde de bis(perfluoropropionyle) :

— 6,47 moles de tétrafluoroéthylène

— 0,2 mole de fluorure de perfluoro dioxa-3,6 méthyl-4 octèn-7 sulfonyle ($CF_2 = CFOCF_2$ CF $(CF_3)$ $OCF_2CF_2SO_2F$)

— 0,8 mole de perfluoro oxa-6 octèn-7 oate de méthyle ($CF_2 = CFOCF_2$ $CF_2$ $CF_2$ $CF_2$ $COOCH_3$).

Le polymère obtenu est transformé en film de 250 µm d'épaisseur. On mesure par méthode ATR (Attenuated Total Reflection) les hauteurs des pics —$SO_2F$ (1460 $cm^{-1}$) et —$COOCH_3$ (1780 $cm^{-1}$).

b) On hydrolyse le film dans NaOH 120 g/l/$CH_3OH$ 40 % à 90 °C pendant 16 heures. On lave la membrane à l'eau et la sèche sous vide à 50 °c pendant 16 heures. La membrane est immergée dans $SOCl_2$ à 80 °C pendant 10 heures (conversion des groupements — COONa en groupements — COCl, vérifiée par la méthode ATR — pic caractéristique à 1810 $cm^{-1}$).

c) On fait tremper pendant 10 h à 80 °C le film précédent dans du dichlorure de l'acide perfluorobutane dioïque

d) La membrane après séchage superficiel est placée dans un réacteur en polytétrafluoroéthylène, une surface de la membrane étant mise en contact avec une solution dans le méthanol de 0,42 g de peroxyde de sodium et 20 g d'eau à — 15 °C pendant 1 heure. On lave la membrane avec de l'eau froide après l'avoir sortie du réacteur, on élève progressivement la température à 40 °C et conserve la membrane à 40 °C pendant 2 heures sous atmosphère d'azote. On immerge la membrane dans du méthanol contenant HCl pour convertir les groupements COCl et COOH résiduels en $COOCH_3$. L'analyse ATR montre une diminution sensible du pic du groupe $COOCH_3$.

e) La membrane est hydrolysée dans NaOH 120 g/l — $CH_3OH$ 40 % dans l'eau (en volume) à 90 °C pendant 8 heures. L'observation au microscope de la section de la membrane montre que la couche renfermant le polymère $P_1$ est d'environ 20 µm.

f) Le polymère constituant la susdite couche de 20 µm présente un poids équivalent de 1000 (masse en gramme de polymère contenant une mode de groupe échangeur) et la répartition suivante des motifs (en moles) :

— 0,04 mole de motifs I où T représente : — $(-CF_2-)_2$, w = 2, p = 0 et q = 4

— 0,2 mole de motifs II

— 0,72 mole de motifs III

— 6,47 moles de motifs IV

g) La membrane est installée dans une cellule d'électrolyse, la surface traitée faisant face à la cathode et on effectue l'électrolyse du chlorure de sodium dans les conditions suivantes :

— section de passage du courant dans la membrane : 0,5 $dm^2$.

— anode constituée d'un substrat en titane et comportant un revêtement à base de métaux précieux.

— cathode : plaque perforée de nickel

— distance interpolaire : 3 mm

— anolyte : alimentation par une solution aqueuse saturée de chlorure de sodium, la concentration dans l'anolyte étant maintenue à 200 g/l.

— catholyte : solution aqueuse de soude dont la concentration est maintenue à 450 g/l par adjonction d'eau

— densité de courant : 30 A/$dm^2$

— température dans les compartiments anodique et cathodique 85 °C

Résultats :

| | | | |
|---|---|---|---|
| - Durée de passage du courant | : | 24 h | 720 h |
| - Rendement en courant | : | 95 % | 95 % |
| - Tension | : | 3,45 v | 3,45 v |

Après immersion de la membrane dans une solution de soude à 45 % en poids à 90 °C pendant 8 heures on n'observe aucune dégradation de la membrane ni aucune diminution des performances durant de nouveaux essais en électrolyse dans les conditions sus-mentionnées.

Exemple 3

a) On terpolymérise dans les conditions prévues dans le brevet français 1 590 264 au sein du trifluoro-1,1,2 trichloro-1,2,2 éthane et en présence de peroxyde de bis (perfluoropropionyle) :

— 6,47 moles de tétrafluoroéthylène

— 0,2 mole de fluorure de perfluoro dioxa-3,6 méthyl-4 octèn-7 sulfonyle ($CF_2 = CFOCF_2$ CF ($CF_3$) $OCF_2CF_2SO_2F$)

— 0,8 mole de perfluoro oxa-6 octèn-7 oate de méthyle ($CF_2 = CFOCF_2$ $CF_2$ $CF_2$ $CF_2$ $COOCH_3$).

Le polymère obtenu est transformé en film de 250 µm d'épaisseur. On mesure par méthode ATR (Attenuated Total Reflection) les hauteurs des pics —$SO_2F$ (1460 $cm^{-1}$) et —$COOCH_3$ (1780 $cm^{-1}$).

b) On hydrolyse le film dans NaOH 120 g/l/$CH_3OH$ 40 % à 90 °C pendant 16 heures. On lave la membrane à l'eau et la sèche sous vide à 50 °C pendant 16 heures. La membrane est immergée dans $SOCl_2$ à 80 °C pendant 10 heures (conversion des groupements — COONa en groupements — COCl, vérifiée par la méthode ATR — pic caractéristique à 1810 $cm^{-1}$).

c) On fait tremper pendant 10 h à 80 °C le film précédent dans du dichlorure de l'acide perfluorobutane dioïque

d) La membrane après séchage superficiel est placée dans un réacteur en polytétrafluoroéthylène, une surface de la membrane étant mise en contact avec une solution dans le méthanol de 0,42 g de peroxyde de sodium et 20 g d'eau à — 15 °C pendant 1 heure. On lave la membrane avec de l'eau froide après l'avoir sortie du réacteur, on élève progressivement la température à 40 °C et conserve la membrane à 40 °C pendant 2 heures sous atmosphère d'azote. On immerge la membrane dans du méthanol contenant HCl pour convertir les groupements COCl et COOH résiduels en $COOCH_3$. L'analyse ATR montre une diminution sensible du pic du groupe $COOCH_3$.

e) La membrane est hydrolysée dans NaOH 120 g/l — $CH_3OH$ 40 % dans l'eau (en volume) à 90 °C pendant 8 heures. L'observation au microscope de la section de la membrane montre que la couche renfermant le polymère $P_1$ est d'environ 20 µm.

f) Le polymère constituant la susdite couche de 20 µm présente un poids équivalent de 1000 (masse en gramme de polymère contenant une mole de groupe échangeur) et la répartition suivante des motifs (en moles) :

— 0,04 mole de motifs I où T représente :

$$-\overset{\displaystyle CF_3}{\overset{|}{CF}}-O-(CF_2)_2-O-\overset{\displaystyle CF_3}{\overset{|}{CF}}-$$

et p = 0 et q = 4

— 0,2 mole de motifs II

— 0,72 mole de motifs III

— 6,47 moles de motifs IV

g) La membrane est installée dans une cellule d'électrolyse, la surface traitée faisant face à la cathode et on effectue l'électrolyse du chlorure de sodium dans les conditions suivantes :

— section de passage du courant dans la membrane : 0,5 $dm^2$.

— anode constituée d'un substrat en titane et comportant un revêtement à base de métaux précieux.

— cathode : plaque perforée de nickel

— distance interpolaire : 3 mm

— anolyte : alimentation par une solution aqueuse saturée de chlorure de sodium, la concentration dans l'anolyte étant maintenue à 200 g/l.

— catholyte : solution aqueuse de soude dont la concentration est maintenue à 450 g/l par adjonction d'eau

— densité de courant : 30 $A/dm^2$

— température dans les compartiments anodique et cathodique 85 °C.

Résultats

| | | |
|---|---|---|
| - Durée de passage du courant : | 24 h | 720 h |
| - Rendement en courant : | 95 % | 95 % |
| - Tension : | 3,45 v | 3,45 v |

Après immersion de la membrane dans une solution de soude à 45 % en poids à 90 °C pendant 8 heures on n'observe aucune dégradation de la membrane ni aucune diminution des performances durant de nouveaux essais en électrolyse dans les conditions sus-mentionnées.

**Revendications**

1. Polymères fluorés ioniques caractérisés en ce que l'enchaînement macromoléculaire comprend au moins un motif de formule :

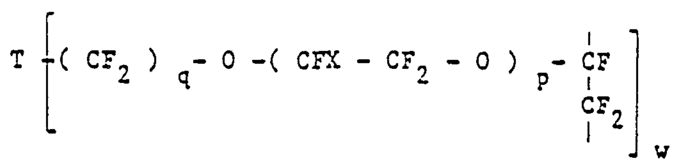

(I)

et des motifs de formule II et/ou des motifs de formule III

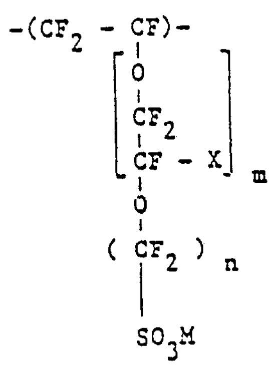

(II)

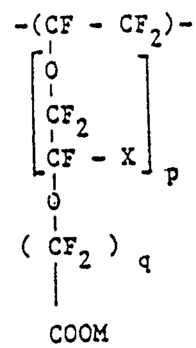

(III)

dans lesquelles :

— w est au moins égal à 2 et inférieur à 10

— m et p, qui peuvent être différents d'un motif à l'autre peuvent avoir les valeurs de 0 à 3 inclus

— n et q, qui peuvent être différents d'un motif à l'autre peuvent avoir les valeurs de 1 à 6 inclus

— M représente un atome d'hydrogène ou un cation monovalent

— X représente un atome de fluor ou un groupement alkyle perfluoré renfermant jusqu'à 10 atomes de carbone

— T représente le lien valentiel ou une chaîne perfluorée de formule

$$— (CFX_1O)_{r3} — (CF_2CFX_1O)_{r1} — W — (OCFX_1CF_2)_{r2} — (OCFX_1)_{r4} —$$

dans laquelle

— $X_1$ représente X ou un groupement alkyle perfluoré ayant jusqu'à 10 atomes de carbone et portant une ou des fonctions sulfoniques et/ou carboxyliques

— W représente un radical perfluoré, linéaire ou cyclique, renfermant jusqu'à 12 atomes de carbone

— r1 et r2 peuvent prendre séparément une valeur de 0 à 3 inclus

r3 et r4 peuvent prendre séparément les valeurs de 0 ou 1.

2. Polymères selon la revendication 1, caractérisés en ce qu'ils comportent outre les motifs de formule I et les motifs de formule II et/ou III, des motifs de formule

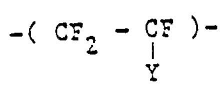

(IV)

dans laquelle le symbole Y représente un atome d'hydrogène, un atome de chlore, un atome de fluor, un radical alkyle perfluoré ou alkoxy perfluoré renfermant jusqu'à 10 atomes de carbone.

3. Polymères selon l'une quelconque des revendications 1 ou 2, caractérisés en ce que les motifs de formule I, II et/ou III et éventuellement IV sont présents en quantités telles que le poids équivalent desdits polymères soit compris entre 400 et 10 000.

4. Polymères selon la revendication 2, caractérisé en ce que dans les formules I, II, III et IV, les symboles ont les significations suivantes : le symbole X représente un atome de fluor, les symboles m et p représentent 0 ou 1, le symbole n représente 2, 3, 4 ou 5 et le symbole q représente 2, 3, 4 ou 5.

5. Polymères selon l'une quelconque des revendications 1 à 4, caractérisés en ce que lesdits polymères comportent des motifs de formule :

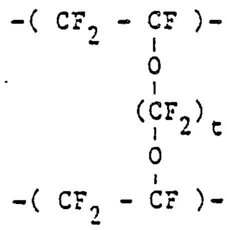

(Ia)

dans laquelle t représente un nombre compris entre 2 et 15 inclus, associés à des motifs de formule

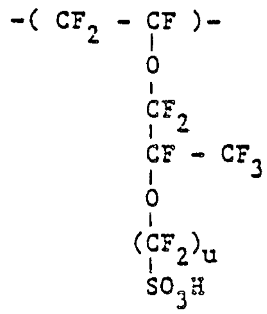

(IIa)

et/ou des motifs de formule

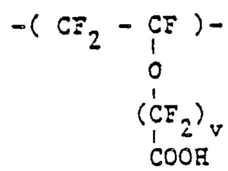

(IIIa)

où u et v représentent séparément 2, 3 ou 4.

6. Polymères selon l'une quelconque des revendications 1 à 5, caractérisés en ce que les motifs I à IV sont répartis comme suit (en moles, pour un poids équivalent de 1 000) :

— I supérieur à 0 et inférieur ou égal à 2,75
— II supérieur ou égal à 0 et inférieur ou égal à 1
— III supérieur ou égal à 0 et inférieur ou égal à 1
— IV supérieur ou égal à 0 et inférieur ou égal à 8,08,

la somme II + III n'étant pas nulle.

7. Procédé de préparation des polymères selon l'une quelconque des revendications 1 à 6, caractérisé en ce qu'il consiste à former un polymère $P_2$ comportant au moins l'une des entités de formules Va — associés éventuellement à des motifs Vb — à Vd et à soumettre ledit polymère à un traitement permettant l'élimination des groupements de formules VIa à VId et l'obtention de liaisons $CF_2 - CF_2$ à l'intérieur du même motif (Va ou $Va_1$) ou entre deux motifs (Vb, Vc ou Vd), les formules précitées ayant les significations suivantes :

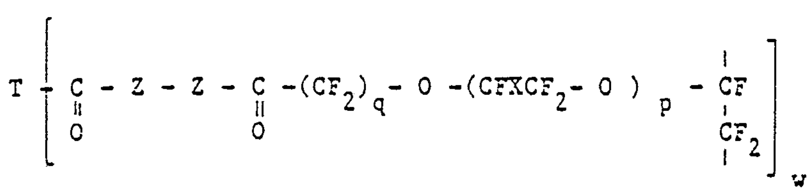

(Va)

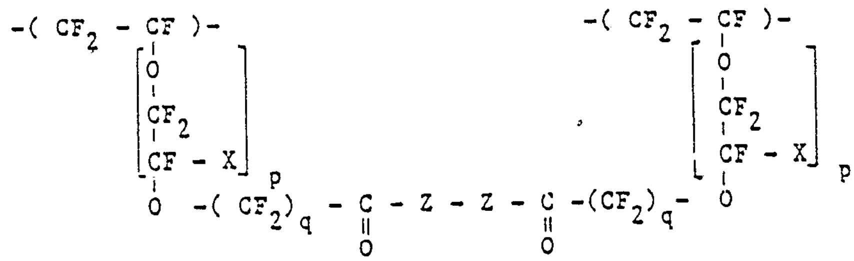

Va1

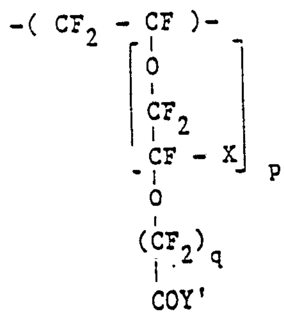

(Vb)

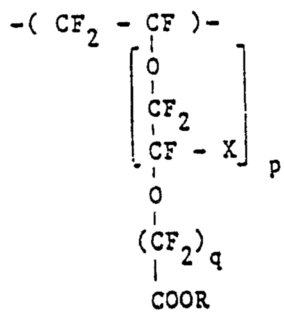

(Vc)

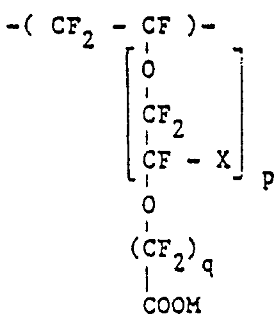

(Vd)

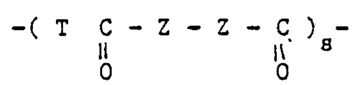

(Ve)

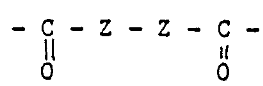

(VIa)

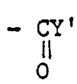

(VIb)

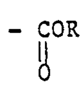

(VIc)

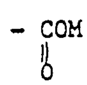

(VId)

où p, q, M possèdent les significations données précédemment, Z représente O, NH ou —Z-Z— représentent ensemble —O— ou —N = N—, Y' représente F, Cl ou Br et R représente un radical alkyle ayant de 1 à 5 atomes de carbone, s est au moins égal à 1 et n'excède pas 10.

8. Procédé selon la revendication 7, caractérisé en ce que l'élimination des motifs de formule VIa à VId est réalisée par traitement thermique, par irradiation, par action d'un agent oxydant ou par réaction chimique.

9. Procédé selon la revendication 7, caractérisé en ce que les polymères $P_2$ possédant les entités de formule Va à Ve sont eux-mêmes obtenus par modification de polymères $P_3$ comportant des motifs de formule II éventuellement associés à d'autres motifs tels que les motifs de formule III, et/ou des motifs de formule IV.

10. Procédé selon la revendication 9, dans lequel, pour l'obtention de polymères $P_2$ comportant des motifs de formule Va, associés éventuellement à des motifs Ve, formules dans lesquelles —Z— représente —O—, on effectue, avant traitement de transformation, une mise en contact du polymère $P_3$ avec un composé de formule

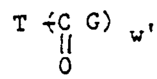 (VII)

dans laquelle

— T possède la signification donnée précédemment

— G représente OH, F, Cl, Br, I ou OR, le symbole R représentant un radical alkyle ayant de 1 à 5 atomes de carbone

— w' représente un nombre compris entre 2 et 4 inclus ou avec l'anhydride de l'acide répondant à la formule VII.

11. Procédé selon la revendication 10, caractérisé en ce que le composé de formule VII est l'acide perfluorobutane dioïque ou le bis(trifluorométhyl)-2,7 dioxa-3,6 perfluorooctane dioïque-1,8.

12. Procédé selon la revendication 9, caractérisé en ce que la modification est effectuée au moyen de peroxyde d'hydrogène, d'un peroxyde métallique, d'hydrazine, de $Cl_2$, $PCl_5$, $PCl_3$, $POCl_3$, $PBr_3$, $PBr_5$ ou $SOCl_2$.

13. Membranes utilisables notamment pour l'électrolyse de solutions aqueuses d'halogénures alcalins, caractérisées en ce qu'elles sont constituées, en tout ou partie, au moyen d'un polymère selon l'une quelconque des revendications 1 à 6.

**Claims**

1. Ionic fluoro polymers characterized in that the macromolecular chain comprises at least one unit of formula :

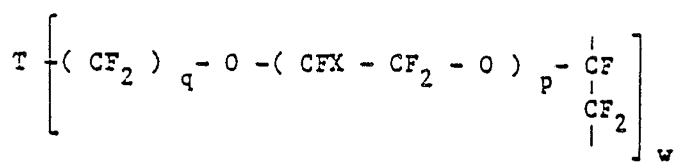 (I)

and units of formula II and/or units of formula III

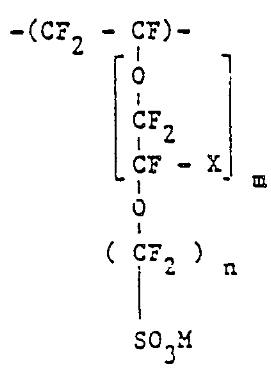 (II) 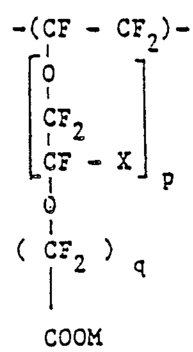 (III)

in which :

w is at least equal to 2 and smaller than 10

m and p, which may be different from one unit to another, may have the values of 0 to 3 inclusive

n and q, which may be different from one unit to another, may have the values of 1 to 6 inclusive
M denotes a hydrogen atom or a monovalent cation
X denotes a fluorine atom or a perfluorinated alkyl group containing up to 10 carbon atoms
T denotes the valency bond or a perfluorinated chain of formula

$$—(CFX_1O)_{r3}—(CF_2CFX_1O)_{r1}—W—(OCFX_1CF_2)_{r2}—(OCFX_1)_{r4}—$$

in which
$X^1$ denotes X or a perfluorinated alkyl group containing up to 10 carbon atoms and carrying one or more sulphonic and/or carboxylic groups
W denotes a linear or cyclic perfluorinated radical containing up to 12 carbon atoms
r1 and r2 may separately assume a value of 0 to 3 inclusive
r3 and r4 may separately assume the values of 0 or 1.

2. Polymers according to Claim 1, characterized in that in addition to the units of formula I and the units of formula II and/or III, they comprise units of formula

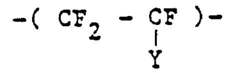

(IV)

in which the symbol Y denotes a hydrogen atom, a chlorine atom, a fluorine atom, or a perfluorinated alkyl or perfluorinated alkoxy radical containing up to 10 carbon atoms.

3. Polymers according to either of Claims 1 and 2, characterized in that the units of formula I, II and/or III and, optionally, IV are present in such quantities that the equivalent weight of the said polymers is between 400 and 10,000.

4. Polymers according to Claim 2, characterized in that in formulae I, II, III and IV, the symbols have the following meanings : the symbol X denotes a fluorine atom, the symbols m and p denote 0 or 1, the symbol n denotes 2, 3, 4 or 5 and the symbol q denotes 2, 3, 4 or 5.

5. Polymers according to any one of Claims 1 to 4, characterized in that the said polymers comprise units of formula :

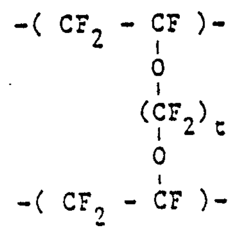

(Ia)

in which t denotes a number between 2 and 15 inclusive, which are combined with units of formula

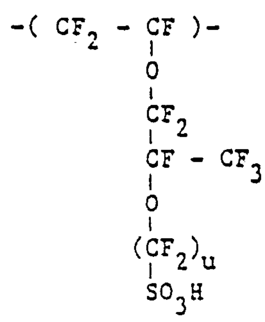

(IIa)

and/or units of formula

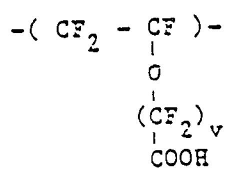

(IIIa)

where u and v separately denote 2, 3 or 4.

6. Polymers according to any one of Claims 1 to 5, characterised in that the units I to IV are distributed as follows (in moles, for an equivalent weight of 1,000) :

I greater than 0 and smaller or equal to 2.75
II greater than or equal to 0 and smaller than or equal to 1
III greater than or equal to 0 and smaller than or equal to 1
IV greater than or equal to 0 and smaller than or equal to 8.08, the sun II + III not being zero.

7. Process for the preparation of the polymers according to any one of Claims 1 to 6, characterized in that it consists in forming a polymer $P_2$ comprising at least one of the entities of formulae Va — optionally combined with units Vb to Vd and in subjecting the said polymer to a treatment permitting the removal of groups of formulae VIa to VId and the production of $CF_2—CF_2$ bonds within the same unit (Va or $Va_1$) or between two units (Vb, Vc or Vd), the abovementioned formulae having the following meanings :

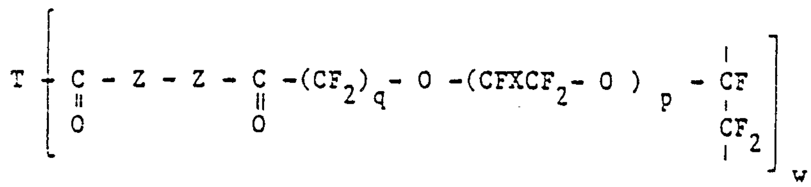
(Va)

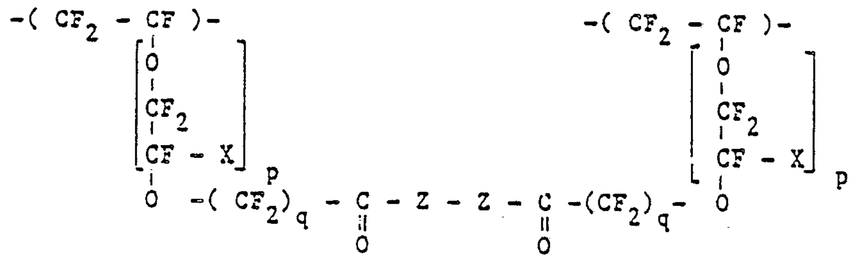
$Va_1$

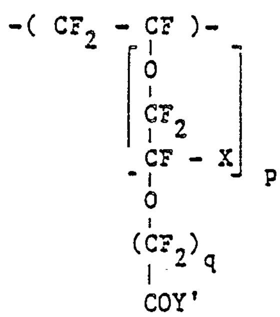
(Vb)

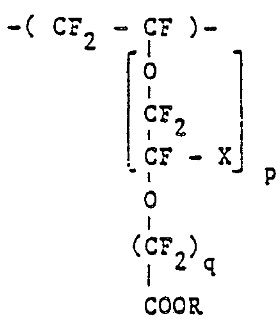
(Vc)

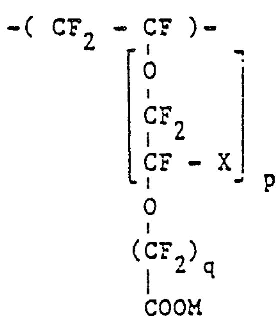
(Vd)

$$-(T\ \underset{O}{\underset{\|}{C}} - Z - Z - \underset{O}{\underset{\|}{C}})_s- \qquad \text{(Ve)}$$

$$-\underset{O}{\underset{\|}{C}} - Z - Z - \underset{O}{\underset{\|}{C}} - \qquad \text{(VIa)}$$

$$-\underset{O}{\underset{\|}{C}}Y' \qquad \text{(VIb)}$$

$$-\underset{O}{\underset{\|}{C}}OR \qquad \text{(VIc)}$$

$$-\underset{O}{\underset{\|}{C}}OM \qquad \text{(VId)}$$

where p, q and M have the meanings given above, Z denotes O or NH or —Z—Z— together denote —O— or —N=N—, Y' denotes F, Cl or Br and R denotes an alkyl radical containing from 1 to 5 carbon atoms, and s is at least equal to 1 and does not exceed 10.

8. Process according to Claim 7, characterized in that the removal of the units of formula VIa to VId is effected by heat treatment, by irradiation, by the action of an oxidizing agent or by chemical reaction.

9. Process according to Claim 7, characterized in that polymers $P_2$ containing the entities of formula Va to Ve are themselves obtained by modification of polymers $P_3$ containing units of formula II optionally combined with other units such as units of formula III, and/or units of formula IV.

10. Process according to Claim 9, in which, in order to obtain polymers $P_2$ containing units of formula Va, optionally combined with units Ve, in which formulae —Z— denotes —O—, the polymer $P_3$ is brought into contact, before conversion treatment, with a compound of formula

$$T\,(\underset{O}{\underset{\|}{C}}\,G)_{w'} \qquad \text{(VII)}$$

in which

T has the meaning given above

G denotes OH, F, Cl, Br, I or OR, the symbol R denoting an alkyl radical containing from 1 to 5 carbon atoms

w' denotes a number between 2 and 4 inclusive or with the anhydride of the acid corresponding to the formula VII

11. Process according to Claim 10, characterized in that the compound of formula VII is perfluorobutanedioic or 2,7-bis(trifluoromethyl)-3,6-dioxa-1,8-perfluorooctanedioic acid.

12. Process according to Claim 9, characterized in that the modification is performed by means of hydrogen peroxide, of a metal peroxide, of hydrazine, of $Cl_2$, $PCl_5$, $PCl_3$, $POCl_3$, $PBr_3$, $PBr_5$ or $SOCl_2$.

13. Membranes capable of being employed in particular for the electrolysis of aqueous solutions of alkali metal halides, characterized in that they are wholly or partially made up by means of a polymer according to any one of Claims 1 to 6.

**Patentansprüche**

1. Ionische fluorierte Polymere, dadurch gekennzeichnet, daß die makromolekulare Kette wenigstens eine Baueinheit der Formel :

$$T\left[-(CF_2)_q - O - (CFX - CF_2 - O)_p - \begin{array}{c} | \\ CF \\ | \\ CF_2 \\ | \end{array}\right]_w \qquad \text{(I)}$$

aufweist und Baueinheiten der Formel II und/oder Baueinheiten der Formel III :

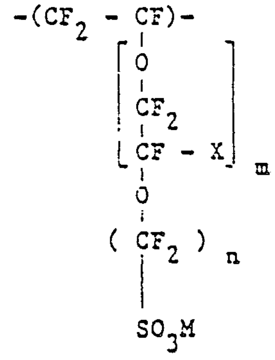

(II)

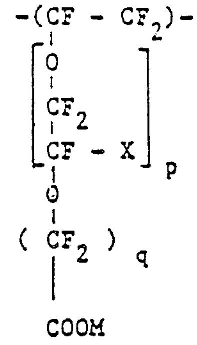

(III)

in denen :

w wenigstens gleich 2 und kleiner als 10 ist

m und p, die von einer Baueinheit zur anderen unterschiedlich sein können, die Werte 0 bis einschließlich 3 aufweisen können,

n und q, die von einer Baueinheit zur anderen unterschiedlich sein können, die Werte 1 bis einschließlich 6 einnehmen können,

M ein Wasserstoffatom oder ein monovalentes Kation darstellt

X ein Fluoratom oder eine perfluorierte Alkylgruppe mit bis zu 10 Kohlenstoffatomen darstellt,

T die Valenzbindung oder eine perfluorierte Kette der Formel

$$—(CFX_1O)_{r3}—(CF_2CFX_1O)_{r1}—W—(OCFX_1CF_2)_{r2}—(OCFX_1)_{r4}—$$

darstellt, in der

$X_1$ X oder eine perfluorierte Alkylgruppe mit bis zu 10 Kohlenstoffatomen darstellt, die ein oder mehrere Sulfonfunktionen und/oder Carboxylfunktionen aufweist,

W einen perfluorierten linearen oder cyclischen Rest darstellt, der bis zu 12 Kohlenstoffatome aufweist,

$r^1$ und $r^2$ jeweils unabhängig einen Wert von 0 bis einschließlich 3 einnehmen können,

$r^3$ und $r^4$ jeweils unabhängig einen Wert von 0 oder 1 einnehmen können.

2. Polymere nach Anspruch 1, dadurch gekennzeichnet, daß sie außer den Baueinheiten der Formel I und den Baueinheiten der Formeln II und/oder III, Baueinheiten der Formel

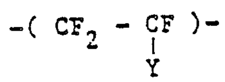

(IV)

aufweisen, in der das Symbol Y ein Wasserstoffatom, ein Chloratom, ein Fluoratom, einen perfluorierten Alkylrest oder einen perfluorierten Alkoxyrest mit bis zu 10 Kohlenstoffatomen darstellt.

3. Polymere nach einem der Ansprüche 1 oder 2, dadurch gekennzeichnet, daß die Baueinheiten der Formeln I, II und/oder III und gegebenenfalls IV in jeweils einer solchen Anzahl anwesend sind, daß das Äquivalenzgewicht dieser Polymere zwischen 400 und 10.000 liegt.

4. Polymere nach Anspruch 2, dadurch gekennzeichnet, daß in den Formeln I, II, III und IV die Symbole die nachfolgende Bedeutung haben : Das Symbol X stellt ein Fluoratom dar, die Symbole m und p nehmen 0 oder 1 ein, das Symbol n nimmt 2, 3, 4 oder 5 ein und das Symbol q nimmt 2, 3, 4 oder 5 ein.

5. Polymere gemäß einem der Ansprüche 1 bis 4, dadurch gekennzeichnet, daß diese Polymere Baueinheiten der Formel

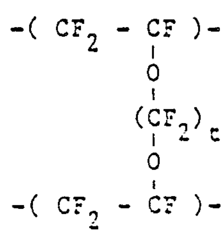

(Ia)

aufweisen, in der t eine Zahl zwischen 2 und einschließlich 15 darstellt, die mit Baueinheiten der Formel

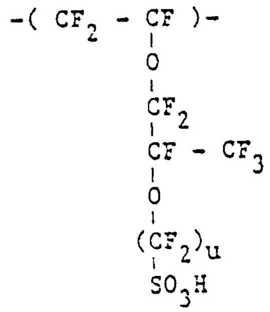

(IIa)

verknüpft sind und/oder Baueinheiten der Formel

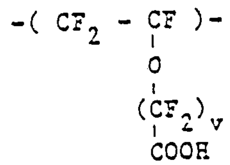

(IIIa)

in denen u und v jeweils unabhängig 2, 3 oder 4 darstellen.

6. Polymere gemäß einem der Ansprüche 1 bis 5, dadurch gekennzeichnet, daß die Baueinheiten I bis IV zur folgenden Teilen vorliegen (in Molen, für ein Gewichtsäquivalent von 1 000) :

I größer als 0 und kleiner oder gleich 2,75

II größer oder gleich 0 und kleiner oder gleich 1,

III größer oder gleich 0 und kleiner oder gleich 1,

IV größer oder gleich 0 und kleiner oder gleich 8,08, wobei die Summe II + III nicht 0 ist.

7. Verfahren zur Herstellung von Polymeren gemäß einem der Ansprüche 1 bis 6, dadurch gekennzeichnet, daß es in der Bildung eines Polymers $P_2$ besteht, umfassend wenigstens eine der Einheiten der Formeln Va — gebunden gegebenenfalls an Baueinheiten Vb — bis Vd und dem Behandeln dieses Polymers in einer Weise, die die Eliminierung von Gruppen der Formeln VIa bis VId und die Erzeugung von Bindungen $CF_2 — CF_2$ im Inneren der gleichen Baueinheit (Va oder $Va_1$) oder zwischen zwei Baueinheiten (Vb, Vc oder Vd) erlaubt, wobei die vorgenannten Formeln jeweils die nachfolgende Bedeutung haben :

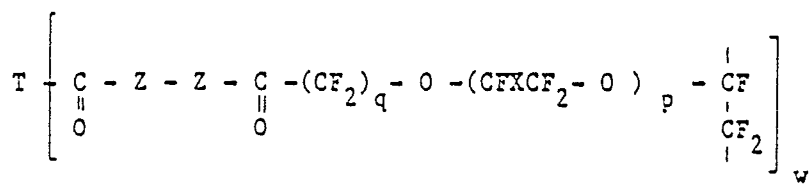

(Va)

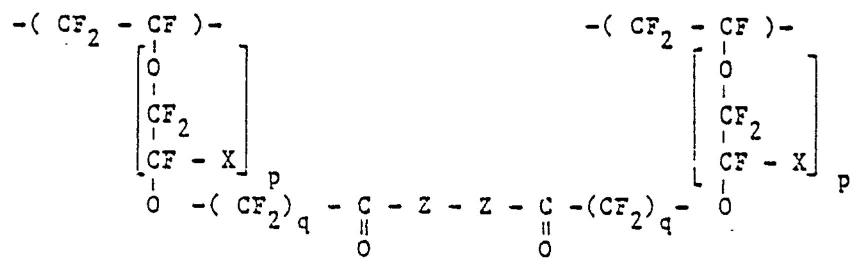

$Va_1$

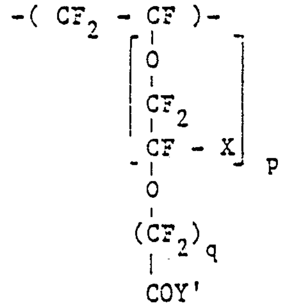

(Vb)

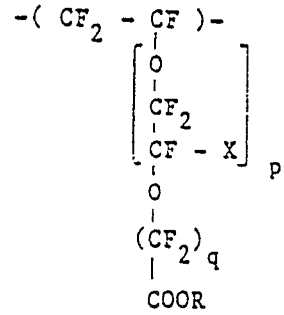
(Vc)

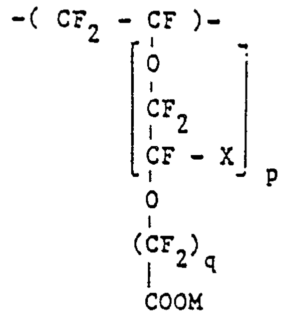
(Vd)

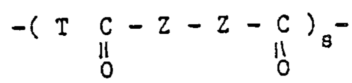
(Ve)

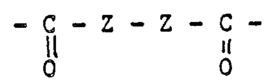
(VIa)

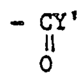
(VIb)

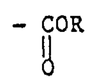
(VIc)

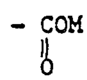
(VId)

worin p, q und M die vorgenannte Bedeutung haben, Z darstellt O oder NH oder —Z—Z zusammen —O— oder —N=N— darstellen, Y' darstellt F, Cl oder Br und R einen Alkylrest mit 1 bis 5 Kohlenstoffatomen darstellt, wobei s wenigstens gleich 1 ist und nicht größer ist als 10.

8. Verfahren nach Anspruch 7, dadurch gekennzeichnet, daß die Eliminierung von Baueinheiten der Formeln VIa bis VId durch thermische Behandlung, durch Bestrahlung, durch Einwirkung eines oxidierenden Agens oder durch chemische Reaktion bewirkt wird.

9. Verfahren nach Anspruch 7, dadurch gekennzeichnet, daß die Polymere $P_2$, die Einheiten der Formeln Va bis Ve aufweisen, selbst durch Modifikation von Polymeren $P_3$ erhalten werden, wobei letzere Baueinheiten der Formel II aufweisen, die gegebenenfalls an andere Baueinheiten wie solche der Formel III gebunden sind und/oder Baueinheiten der Formel IV aufweisen.

10. Verfahren nach Anspruch 9, bei dem man, um Polymere $P_2$ zu erhalten, die Baueinheiten der Formel Va aufweisen, evtl. verknüpft mit Baueinheiten Ve, wobei in diesen Formeln —Z— —O— darstellt, vor der Behandlung zur Umwandlung das Polymer $P_3$ mit einer Verbindung der Formel

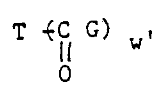
(VII)

in Kontakt bringt, in der

T die vorgenannte Bedeutung besitzt,

G darstellt OH, F, Cl, Br, J oder OR, wobei das Symbol R einen Alkylrest mit 1 bis 5 Kohlenstoffatomen darstellt,

w' eine Zahl von 2 bis einschließlich 4 darstellt oder mit dem Anhydrid einer Säure gemäß der Formel VII in Kontakt bringt.

11. Verfahren nach Anspruch 10, dadurch gekennzeichnet, daß die Verbindung der Formel VII die Perfluorbutan dicarbonsäure oder die Bis(trifluormethyl)-2,7 dioxa-3,6 perfluoroctan-1,8 dicarbonsäure ist.

12. Verfahren nach Anspruch 9, dadurch gekennzeichnet, daß die Modifizierung mittels Wasserstoffperoxid, eines Metallperoxids, Hydrazin, $Cl_2$, $PCl_5$, $PCl_3$, $POCl_3$, $PBr_3$, $PBr_5$ oder $SOCl_2$ durchgeführt wird.

13. Membranen verwendbar insbesondere für die Elektrolyse von wässrigen Lösungen von Alkalihalogeniden, dadurch gekennzeichnet, daß sie ganz oder teilweise aus mindestens einem Polymeren gemäß einem der Ansprüche 1 bis 6 bestehen.